# FASCICULE DE BREVET EUROPEEN

(11) **EP 3 041 652 B1**
(45) Date de publication et mention de la délivrance du brevet: **31.10.2018**
(21) Numéro de dépôt: 14786995.2
(22) Date de dépôt: 01.09.2014
(51) Int. Cl.: A47C 31/02, A44B 18/00, B29C 45/44, B29C 44/12, B60N 2/58

(54) **DISPOSITIF DE RETENUE A CROCHETS**
HALTEVORRICHTUNG MIT HAKEN
RETAINING DEVICE HAVING HOOKS

(30) Priorité: 03.09.2013 FR 1358426
(43) Date de publication de la demande: 13.07.2016
(73) Titulaire: Aplix, 44850 Le Cellier (FR)
(72) Inventeur: MAHE, Anthony, F-44470 Thouare sur Loire (FR); BOSSER, Damien Pierre Antoine, F-44000 Nantes (FR)
(74) Mandataire: Gilbey, Vincent
(86) Numéro de dépôt international: PCT/FR2014/052156
(87) Numéro de publication internationale: WO 2015/033048

(56) Documents cités:
- EP-A1- 1 358 826
- WO-A1-2011/058415
- DE-A1-102010 036 798
- DE-U1-202005 013 339
- US-A- 5 005 242

## Description

### DOMAINE TECHNIQUE

Le présent exposé concerne un dispositif de retenue à crochets, adapté à être fixé à un objet, et destiné à permettre la fixation d'un recouvrement sur cet objet, par la coopération des crochets du dispositif de retenue avec une contrepartie à crochets ou boucles solidaire du recouvrement.

Le dispositif de retenue selon la présente invention est particulièrement adapté pour la fixation d'un recouvrement de type housse sur un objet, notamment un objet moulé, tel qu'une garniture de siège de véhicule automobile.

### ARRIERE-PLAN DE L'INVENTION

Un siège de véhicule automobile est constitué d'une garniture moulée, généralement en mousse, recouverte d'un recouvrement, par exemple en tissu ou en cuir. Actuellement, pour fixer un tissu de recouvrement sur la surface extérieure d'une garniture de siège d'un véhicule automobile, on dispose, dans une ou plusieurs gorges de réception formées à la périphérie de la garniture, des éléments de retenue, adaptés à coopérer avec le recouvrement par des systèmes de clipsage, de butée ou encore, plus récemment, des systèmes auto-agrippants à crochets dans crochets ou crochets dans boucles. Ces éléments de retenue sont, la plupart du temps, surmoulés par la garniture de siège de véhicule, à sa périphérie, au moment où celle-ci est moulée.

La demande de brevet US 2003/0162008 décrit un tel élément de retenue en forme générale de U, comprenant deux parois latérales délimitant un espace intérieur destiné à recevoir un jonc solidaire d'un tissu de recouvrement de siège de véhicule. Chaque paroi latérale porte à son extrémité distale un ergot destiné à coopérer par butée ou clipsage avec le jonc, pour maintenir le recouvrement autour de la garniture de siège de véhicule.

La fixation du jonc par butée ou clipsage, obtenue avec un tel système, n'est pas suffisamment fiable. Par ailleurs, il est très difficile, voire impossible, de défaire cette fixation sans détériorer le recouvrement.

La demande de brevet publiée sous le numéro WO 2011/089334 décrit un élément de retenue d'un autre genre, comprenant deux parois latérales et un fond délimitant une gorge en U, des crochets adaptés à coopérer avec des boucles ou des crochets issus du recouvrement faisant saillie depuis le fond de l'élément de retenue.

Il a été constaté, lors d'essais, que la fixation auto-agrippante obtenue entre le tissu de recouvrement et les crochets situés dans le fond de l'élément de retenue n'était pas pleinement satisfaisante, le recouvrement se détachant facilement de l'élément de retenue lorsqu'on lui appliquait un effort de traction.

DE102010036798 et EP1358826 décrivent un dispositif de retenue conforme au préambule de la revendication 1.

### OBJET ET RESUME DE L'INVENTION

L'un des objectifs de la présente invention est de fournir un dispositif de retenue permettant de remédier aux inconvénients de l'art antérieur énoncés ci-dessus, et, en particulier, qui permette une fixation fiable, résistante aux tractions, et qui puisse se défaire si besoin sans détérioration du recouvrement.

Cet objectif est atteint avec un dispositif de retenue à crochets conforme à la revendication 1.

Dans le présent exposé, sauf précision contraire, on définit la direction principale du dispositif de retenue comme la direction d'introduction de la contrepartie à l'intérieur de la gorge de retenue. Dans le cas où l'élément de retenue présente un plan de symétrie, la première et la deuxième paroi latérale s'étendant, respectivement, de part et d'autre dudit plan de symétrie, la direction principale s'étend dans ledit plan de symétrie. Dans le cas où l'élément de retenue comporte une base plane ou si un élément de fond plan est rapporté sur l'élément de retenue comme il sera suggéré dans la suite, la direction principale est sensiblement orthogonale à ladite base ou audit élément de fond.

Sauf précision contraire, on définit la direction latérale du dispositif de retenue comme la direction perpendiculaire à la direction principale précitée, et qui est en outre sensiblement orthogonale aux parois latérales de l'élément de retenue ou à un plan médian entre ces deux parois.

Par ailleurs, dans le présent exposé, sauf précision contraire, on définit la direction longitudinale du dispositif de retenue comme la direction perpendiculaire aux directions principale et latérale précitées, qui est donc sensiblement parallèle aux parois latérales de l'élément de retenue. Un plan normal à cette direction longitudinale est un plan transversal du dispositif de retenue.

L'élément de retenue selon une forme préférentielle de l'invention comporte, sur au moins l'une de ses parois latérales, une pluralité de crochets destinés à coopérer avec les crochets et/ou les boucles d'une contrepartie, constituant ainsi une fixation auto-agrippante. Ces crochets font saillie depuis la face interne de ladite paroi latérale et leur partie utile à l'accrochage est orientée vers la base.

Avec une telle orientation, les crochets n'entravent pas l'introduction de la contrepartie à l'intérieur de la gorge de retenue, mais assurent une résistance importante à la traction, une fois qu'ils ont coopéré avec la contrepartie. Lorsque l'on tire sur la contrepartie en éloignement de la gorge de retenue, dans la direction principale, les crochets travaillent en cisaillement, empêchant très efficacement l'extraction de la contrepartie. Il a été mesuré qu'avec une telle configuration, l'effort nécessaire pour désengager la contrepartie est au moins doublé par rapport à l'effort qui serait nécessaire pour obtenir ce résultat si les crochets étaient disposés dans le fond de la gorge de retenue.

Selon un exemple, si l'on réalise la projection d'un crochet dans un plan transversal du dispositif de retenue, l'angle saillant mesuré entre un premier vecteur tangent à la fibre neutre d'un crochet à l'extrémité distale du crochet et orienté en éloignement dudit crochet et un deuxième vecteur parallèle à la direction principale du dispositif de retenue et orienté de l'entrée vers le fond de la gorge de retenue, est inférieur strictement à 90°, généralement entre 5 et 65°.

Par fibre neutre, on entend ici la ligne qui est, dans le plan de projection, en tout point, située à égale distance des surfaces inférieure et supérieure du crochet, ladite distance étant mesurée dans une direction orthogonale à la tangente à ladite fibre neutre.

Selon une autre forme préférentielle de l'invention, chaque crochet de l'élément de retenue délimite, à lui seul ou avec la paroi latérale dont il est issu, au moins une cavité de rétention (ou cavité de réception ou de retenue) adaptée à recevoir au moins un crochet ou une boucle de la contrepartie. La cavité de rétention est délimitée, au moins en partie, par la partie utile d'accrochage du crochet orientée vers la base de l'élément de retenue.

On comprend qu'une cavité de rétention d'un crochet est formée par une partie en creux, c'est-à-dire sans matière, s'étendant dans la direction principale z du dispositif de retenue et débouchant vers la base de l'élément de retenue.

Typiquement, lorsque le dispositif de retenue est dans sa configuration d'utilisation, autrement dit lorsque le dispositif de retenue est agencé pour délimiter au moins une partie d'une gorge de réception formée à la périphérie d'un objet, et plus particulièrement lorsqu'il est agencé pour coopérer avec une contrepartie à boucles ou crochets, la partie utile d'accrochage du crochet est séparée de la paroi latérale dont est issu ledit crochet ou d'une autre face dudit crochet, dans la direction latérale du dispositif de retenue, par ladite partie en creux formant la cavité de rétention.

Plus généralement, la cavité de rétention est un volume sans matière interposé, dans une direction orthogonale au plan principal de la paroi latérale, entre la partie utile d'accrochage du crochet et ladite paroi latérale ou une autre face du crochet.

Selon un exemple de réalisation particulier, la cavité de rétention est formée par une partie concave, notamment une partie concave du crochet.

On comprend donc qu'en utilisation, un crochet de l'élément de retenue permet de retenir un crochet ou une boucle de la contrepartie non seulement dans la direction principale, mais également, grâce à la partie utile d'accrochage du crochet, dans la direction latérale du dispositif de retenue, en empêchant en particulier que la boucle ou le crochet de la contrepartie ne se désengage en s'éloignant de la paroi latérale dont il est issu. Typiquement, la cavité de rétention est suffisamment large pour capturer un crochet ou une boucle de la contrepartie, et suffisamment profonde pour empêcher que le crochet ou la boucle de la contrepartie ne s'extraie de la cavité de rétention.

Si l'on réalise la projection d'un crochet dans un plan transversal du dispositif de retenue en utilisation, la largeur de la cavité de rétention dudit crochet est mesurée dans la direction latérale du dispositif de retenue, entre le point bas du crochet (autrement dit le point de la partie utile d'accrochage du crochet le plus proche de la base dans la direction principale) et la partie opposée de l'élément de retenue la plus proche. La partie opposée de l'élément de retenue peut être soit la paroi latérale dont est issue le crochet, soit une face opposée du crochet lui-même.

De la même manière, dans un plan de projection transversal du dispositif de retenue en utilisation, on définit la profondeur de la cavité de rétention comme la distance mesurée dans la direction principale du dispositif de retenue, entre le point bas précité du crochet et le point haut de la face inférieure du crochet orientée vers la base (autrement dit le point de cette face le plus éloigné de la base dans la direction principale, et disposé entre la paroi latérale et le point bas)

Selon un exemple, la largeur de la cavité de rétention d'au moins un crochet, de préférence de chaque crochet, est comprise entre 0,1mm et 3mm, de préférence entre 0,2mm et 2mm, encore plus préférentiellement entre 0,3mm et 1mm.

Selon un exemple, la profondeur de la cavité de rétention d'au moins un crochet, de préférence de chaque crochet, est comprise entre 0,1mm et 3mm, de préférence entre 0,2mm et 2mm, encore plus préférentiellement entre 0,3mm et 1mm.

La largeur maximale d'un crochet est mesurée dans la direction longitudinale du dispositif de retenue, au niveau de la partie utile d'accrochage du crochet, dans un plan de projection du crochet orthogonal à la direction principale z du dispositif de retenue. Dans le cas où les crochets de l'élément de retenue sont destinés à former avec la contrepartie une fixation auto-agrippante du type crochets/boucles, on comprend que cette largeur maximale est celle que les boucles de la contrepartie doivent être capables de passer pour s'insérer dans les cavités de réception des crochets et y être retenues.

La longueur maximale d'un crochet est mesurée dans la direction latérale du dispositif de retenue, depuis la paroi latérale dont est issu le crochet.

Selon un exemple, la largeur maximale du crochet est inférieure à sa longueur maximale. De préférence, la longueur maximale du crochet est au moins égale à un tiers de sa largeur maximale. Encore plus préférentiellement, la longueur maximale du crochet est supérieure ou égale à sa largeur maximale.

L'élément de retenue, réalisé par moulage par injection, est formé d'une seule pièce, par exemple en matériau thermoplastique. Il comporte donc généralement, sur sa surface extérieure, au moins une zone en forme de creux ou en saillie correspondant au point d'injection du matériau de moulage. La fabrication de l'élément de retenue, par moulage, est aisée et peu coûteuse.

Selon un exemple, la base de l'élément de retenue présente au moins une ouverture entre la première et la deuxième paroi latérale. Comme il ressortira de la suite de la présente description, cette ouverture résulte du procédé particulier de fabrication de l'élément de retenue. Généralement, l'ouverture s'étend sur une longueur (prise dans la direction longitudinale) égale ou supérieure à la longueur maximale sur laquelle s'étendent les crochets dans la direction longitudinale.

Selon un exemple, le dispositif de retenue comprend au moins un élément de fond adapté à être positionné entre la première et la deuxième paroi latérale pour obturer l'ouverture. L'élément de fond permet d'assurer l'étanchéité de la gorge de retenue par exemple lors du moulage de l'objet par lequel le dispositif de retenue est surmoulé, si cet objet est moulé. Il est généralement dimensionné pour recouvrir totalement l'ouverture de la base de l'élément de retenue.

L'élément de fond peut être un élément distinct de l'élément de retenue, fixé sur ledit élément de retenue pour obturer l'ouverture.

Selon une variante, l'élément de fond peut être réalisé en une seule pièce avec l'élément de retenue, et constituer une partie rabattable depuis une position dégagée dans laquelle l'ouverture de la base est dégagée vers une position d'obturation dans laquelle elle obture l'ouverture.

Selon une disposition de l'invention, l'élément de retenue et/ou l'élément de fond peut comprendre une matière magnétique aimanté ou non. Par exemple, l'élément de retenue et/ou l'élément de fond peut être réalisé en tout ou partie dans une matière plastique chargée en particules métalliques.

L'utilisation d'une matière magnétique permet, en coopération avec d'autres éléments magnétiques, d'assurer le maintien en position des différents éléments du dispositif de retenue, au moment du surmoulage.

A noter que l'élément de fond peut être constitué d'un matériau différent de ou identique à celui des parois latérales de l'élément de retenue.

Selon un exemple, la pluralité de crochets définit au moins deux séries de crochets espacées dans la direction principale, chaque crochet d'une série de crochets étant décalé par rapport à chaque crochet de l'autre série de crochets dans une direction longitudinale orthogonale à la direction principale. Il a été constaté que les boucles ou les crochets de la contrepartie s'engagent plus facilement dans un maximum de crochets de l'élément de retenue lorsque deux crochets de deux séries de crochets directement adjacentes de l'élément de retenue ne sont pas alignés dans la direction d'introduction de la contrepartie (i.e. la direction principale).

Selon un exemple, les au moins deux séries de crochets forment une première et une deuxième rangées s'étendant dans la direction longitudinale.

Dans le cas particulier où la pluralité de crochets définit plus de deux séries ou rangées de crochets, chaque crochet d'une série ou rangée est généralement décalé dans la direction longitudinale par rapport à chaque crochet de toutes les autres séries ou rangées de crochets portées par la même paroi latérale.

Selon un exemple, un champ de crochets issus d'une face latérale de l'élément de retenue présente, sur au moins une portion de la surface qu'il occupe, une densité de crochets comprise entre 1 crochet/cm² et 100 crochets/cm², de préférence entre 5 crochet/cm² et 50 crochets/ cm², encore plus préférentiellement entre 10 crochet/cm² et 30 crochets/ cm². Cette densité de crochets sera par exemple la densité moyenne, mesurée sur la plus petite surface rectangulaire englobant l'ensemble des crochets du champ de crochets.

Généralement, la densité de crochets est constante sur toute l'étendue du champ de crochets.

Pour assurer son ancrage dans l'objet par lequel il est surmoulé, l'élément de retenue peut comporter une partie d'ancrage, de préférence ajourée, s'étendant sensiblement orthogonalement à la direction principale, depuis au moins l'une de ses parois latérales.

Pour améliorer l'accrochage de la contrepartie, chaque crochet peut comporter au moins deux têtes d'accrochage orientées vers la base de l'élément de retenue. On comprend que les deux têtes d'accrochage sont issues d'une même tige. Elles peuvent par exemple être superposées dans la direction de la hauteur du crochet.

Pour faciliter le démoulage lors de la fabrication de l'élément de retenue, au moins un crochet, de préférence chaque crochet, présente une dépouille dans un plan orthogonal à la direction latérale et/ou dans un plan orthogonal à la direction principale.

Généralement, dans des plans orthogonaux à la direction latérale et/ou dans des plans orthogonaux à la direction principale, des crochets ou parties de crochets situé(e)s du côté supérieur de l'élément de retenue comportent des dépouilles dont l'orientation est inversée par rapport à l'orientation de la dépouille de crochets ou parties de crochets situé(e)s du côté inférieur de l'élément de retenue.

Dans la présente demande, on entend par l'orientation d'une dépouille la direction de démoulage permise par cette dépouille.

De façon avantageuse, pour faciliter le démoulage de l'élément de retenue, les faces internes des parois latérales dudit élément présentent des surfaces inclinées par rapport à la direction principale.

Selon un exemple, dans un plan transversal de l'élément de retenue traversant au moins un crochet, l'élément de retenue présente une dépouille au-dessus et au-dessous dudit crochet. Avantageusement, l'orientation de la dépouille au-dessus du crochet est inversée par rapport à l'orientation de la dépouille en-dessous du crochet.

Selon un exemple, au moins un crochet, de préférence chaque crochet, est délimité par deux joues opposées sensiblement planes.

Par joue d'un crochet, on entend ici une face du crochet sensiblement orthogonale à la direction longitudinale ou tout du moins orientée généralement vers cette direction.

Selon un exemple, au moins un crochet, de préférence chaque crochet, est équipé d'au moins une aile d'accrochage faisant saillie depuis l'une de ses joues. L'aile peut alors être ou non orientée vers la base de l'élément de retenue.

Le dispositif de retenue peut comprendre en outre un piédestal adapté à coopérer avec l'élément de retenue de façon à encadrer les crochets de chaque paroi latérale lors du moulage.

De façon avantageuse, le piédestal comprend au moins un renfoncement adapté à recevoir des crochets faisant saillie d'une paroi latérale de l'élément de retenue, une fois l'élément de retenue monté sur le piédestal.

Selon un exemple, le piédestal comprend une partie magnétique adaptée à coopérer par attraction magnétique avec l'élément de retenue et/ou l'élément de fond.

Comme variante ou en complément, le piédestal peut aussi comporter un système de maintien à l'élément de retenue et/ou à l'élément de fond autre que magnétique, notamment un système d'aspiration, des boucles, etc.

Le présent exposé concerne également un ensemble comprenant un dispositif de retenue tel que défini précédemment, et une contrepartie à crochets ou boucles agencée dans la gorge de retenue de sorte que des crochets ou boucles de ladite contrepartie coopèrent avec des crochets de l'élément de retenue pour réaliser une fixation auto-agrippante.

On comprend que des crochets ou boucles de la contrepartie sont retenus dans des cavités de réception de crochets de l'élément de retenue.

Dans le cas où la contrepartie comprend des boucles, l'ensemble forme une fermeture du type « touch fastener » aussi appelée « fermeture par contact » ou « sans pression ».

Le présent exposé concerne également un ensemble comprenant un objet, notamment un objet moulé, présentant une gorge de réception à sa périphérie et un dispositif de retenue tel que défini précédemment, délimitant au moins une partie de ladite gorge de réception.

Selon un exemple, l'objet est moulé et le dispositif de retenue est surmoulé par l'objet moulé.

Le présent exposé concerne également un tel ensemble comprenant en outre une contrepartie à boucles ou crochets agencée dans la gorge de retenue du dispositif de retenue.

Le présent exposé concerne enfin un procédé de réalisation par moulage d'un dispositif de retenue à crochets, dans lequel on fournit un moule comprenant au moins deux parties de moule adaptées à être assemblées pour former une cavité de moulage dans laquelle les crochets de l'élément de retenue sont formés, on injecte un matériau de moulage dans le moule, notamment en une seule étape d'injection, de telle sorte que le plan de joint des deux parties de moule intersecte chaque crochet et que les parties de crochets formées par une même partie de moule ne comportent pas de contre-dépouille contrariant le démoulage dans la direction principale du dispositif de retenue, et on sépare les deux parties de moule dans la direction principale du dispositif de retenue.

Selon un exemple, les contre-dépouilles d'un crochet par rapport à une partie de moule sont uniquement situées dans la partie de la cavité de moulage délimitée par l'autre partie de moule.

Selon un exemple de mise en oeuvre, la cavité de moulage présente une saillie interne délimitant une ouverture dans la base de l'élément de retenue.

Selon un exemple, on positionne un élément de fond entre la première et la deuxième paroi latérale de l'élément de retenue de manière à obturer ladite ouverture.

Selon un exemple, l'élément de fond est fixé à l'élément de retenue par collage, soudage, assemblage mécanique ou clipsage.

De manière avantageuse, un dispositif de moulage adapté pour la mise en oeuvre du procédé selon l'invention peut comprendre une première et une deuxième partie de moule adaptées à être assemblées pour former un ensemble de forme complémentaire d'au moins la gorge de retenue de l'élément de retenue, ladite première partie de moule délimitant au moins une portion de la première et de la deuxième paroi latérale de l'élément de retenue ainsi qu'une partie de chaque crochet de l'élément de retenue, et la deuxième partie de moule délimitant au moins une portion de la première et de la deuxième paroi latérale de l'élément de retenue ainsi que la partie restante de chaque crochet.

Un tel dispositif de moulage permet de démouler les crochets de l'élément de retenue sans contrainte ou avec des contraintes limitées, notamment sans les déformer. Ce dispositif de moulage permet, en outre, d'obtenir des crochets de formes très diverses (crochets à extrémité pointue, crochets à faces non parallèles, etc.).

### BREVE DESCRIPTION DES DESSINS

L'invention sera bien comprise et ses avantages apparaîtront mieux, à la lecture de la description détaillée qui suit, de plusieurs modes de réalisation représentés à titre d'exemples non limitatifs. La description se réfère aux dessins annexés sur lesquels :
- La figure 1 est une vue en perspective d'un dispositif de retenue selon un premier exemple de réalisation ;
- La figure 2 est une vue en coupe selon II-II de la figure 1 ;
- La figure 2A est une vue selon la direction A du détail de la figure 2 ;
- La figure 3 est une vue en coupe transversale selon III-III du dispositif de la figure 1 ;
- La figure 4 est une vue en projection dans un plan transversal, d'un crochet de la figure 1 ;
- La figure 5 illustre un piédestal adapté à coopérer avec l'élément de retenue des figures 1 à 4;
- La figure 6 montre l'élément de retenue monté sur le piédestal de la figure 5 ;
- La figure 7 est une vue de face montrant les zones d'appui entre l'élément de retenue et le piédestal, pour assurer l'étanchéité de la gorge de retenue ;
- La figure 8 montre un autre exemple de piédestal pouvant être utilisé dans le dispositif de retenue selon l'invention ;
- La figure 9 montre l'élément de retenue des figures 1 à 4 une fois surmoulé par l'objet moulé, et coopérant avec une contrepartie solidaire d'un recouvrement pour maintenir ledit recouvrement sur l'objet moulé (autrement dit en utilisation);
- La figure 10 montre un objet moulé muni, à sa périphérie, d'une gorge de réception dont le fond est délimité par une pluralité de dispositifs de retenue selon l'invention, coopérant avec une contrepartie solidaire d'un recouvrement ;
- Les figures 11A et 11B montrent un dispositif de moulage pour la fabrication par moulage par injection d'un élément de retenue selon l'invention, respectivement en position fermée et ouverte ;
- Les figures 12 et 13 illustrent un élément de retenue selon un deuxième exemple de réalisation ;
- La figure 14 illustre un troisième exemple de réalisation ;
- La figure 15 illustre un quatrième exemple de réalisation ;
- La figure 16 illustre une variante du quatrième exemple de réalisation ;
- La figure 17 est une vue en coupe transversale d'un élément de retenue et d'un élément de fond d'un dispositif de retenue selon un deuxième exemple de réalisation de l'invention.

### DESCRIPTION DETAILLEE D'EXEMPLES DE REALISATION

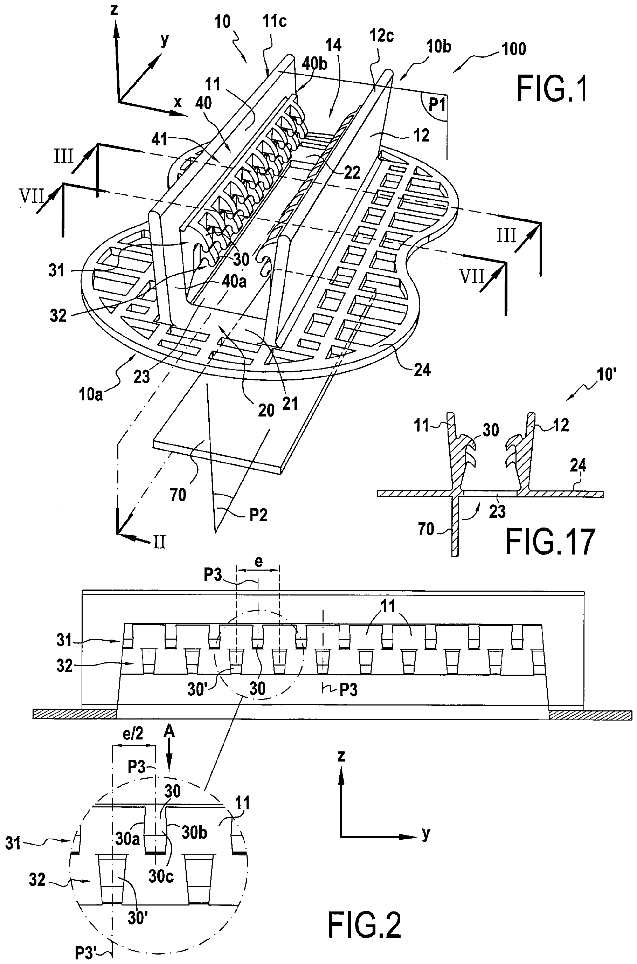

Un dispositif de retenue 100 selon un premier exemple de réalisation est illustré notamment sur la figure 1. Un tel dispositif est adapté à être disposé dans un moule destiné à la réalisation par moulage d'un objet, le matériau de moulage constituant l'objet pouvant être notamment une mousse, par exemple une mousse thermoplastique ou réticulée. Le dispositif de retenue est ainsi surmoulé par l'objet, une fois moulé. Avantageusement, il délimite alors une portion de fond d'une gorge de réception formée à la périphérie de l'objet.

Dans l'exemple décrit ci-après, l'objet sur lequel est fixé le dispositif de retenue 100 est une garniture de siège de véhicule automobile, réalisée par moulage.

Cet exemple n'est toutefois pas limitatif. L'objet auquel le dispositif de retenue 100 est fixé peut être tout autre objet éventuellement non moulé nécessitant d'être associé à un recouvrement. On pourra aussi envisager de fixer le dispositif de retenue selon l'invention autrement que par surmoulage, par exemple par collage, soudage, assemblage mécanique, clipsage ou tout autre mode de fixation adéquat.

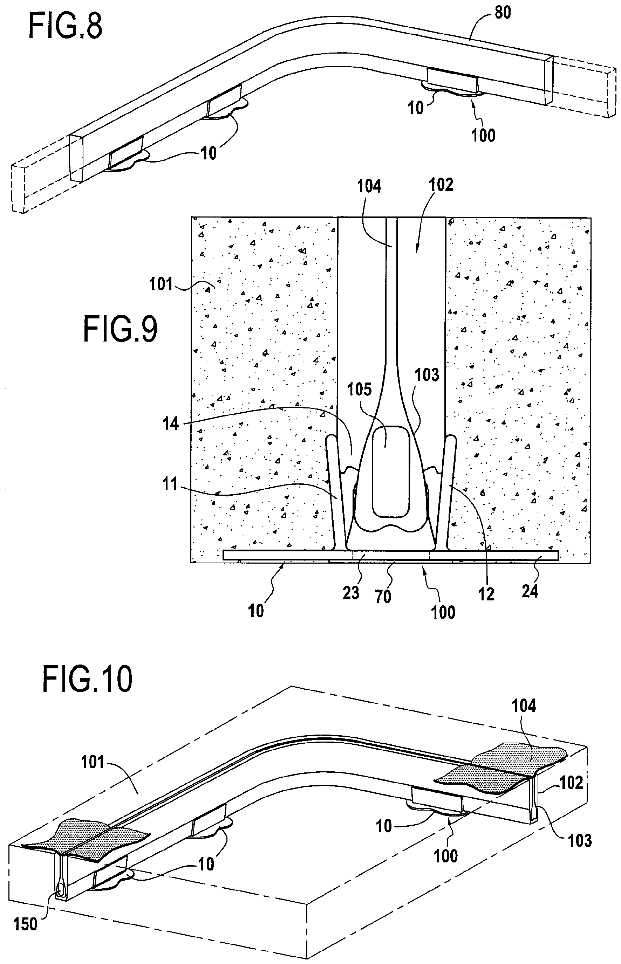

La figure 10 illustre un exemple de garniture de siège de véhicule automobile 101, constituée de mousse thermoplastique ou réticulée et réalisée par moulage, présentant, à sa périphérie, une gorge de réception 102, formée au moment du moulage, et dont le tracé comprend des portions rectilignes et courbes. Cette garniture 101 est destinée à être revêtue d'un recouvrement 104. Dans l'exemple illustré, le recouvrement 104 est solidaire d'un gousset 103 muni, sur sa face externe, de crochets ou de boucles. A l'intérieur du gousset 103 s'étend un jonc 105, par exemple sous la forme d'une barre en matière plastique rigide, destinée à rigidifier l'ensemble.

Dans l'exemple, plusieurs dispositifs de retenue 100, espacés les uns des autres, sont répartis le long des portions rectilignes de ce tracé. Ils ont, de façon usuelle, été surmoulés par la garniture de siège de véhicule. Comme il sera décrit dans la suite, chacun d'entre eux est muni de crochets adaptés à coopérer avec les boucles ou les crochets du gousset 103, pour maintenir le recouvrement 104 autour de la garniture de siège de véhicule 101.

Un dispositif de retenue 100 selon un premier exemple de réalisation de l'invention est illustré plus en détail sur les figures 1 à 4.

Ce dispositif de retenue 100 comprend notamment un élément de retenue 10 obtenu par un procédé de moulage par injection, notamment d'une matière thermoplastique, et un élément de fond 70 fixé à l'élément de retenue 10.

Comme illustré sur la figure 1, l'élément de retenue 10 comporte deux parois latérales 11, 12, espacées l'une de l'autre dans une direction latérale x, et une base 20 comprenant des moyens de liaison reliant entre elles les deux parois latérales 11, 12.

L'élément de retenue 10 forme un élément allongé, dont on définit, dans sa direction longitudinale y, une extrémité avant 10a et une extrémité arrière 10b.

Dans un plan transversal P1 de l'élément de retenue 10, orthogonal à la direction longitudinale y, les parois latérales 11, 12 et la base 20 délimitent une gorge de retenue 14 de profil général en U ouverte dans une direction principale z du dispositif de retenue 100, et destinée à recevoir une contrepartie 103 à crochets ou boucles, solidaire du recouvrement 104 (figure 9).

Pour la suite, on définit un «côté inférieur» et un «côté supérieur» du dispositif de retenue 100 en référence à cette direction principale z, la base 20 étant située du côté inférieur et les bords libres longitudinaux 11c, 12c des parois latérales 11, 12, du côté supérieur.

Dans l'exemple particulier représenté, les parois latérales 11, 12 s'étendent de part et d'autre d'un plan de symétrie P2 de l'élément de retenue 10. Comme illustré sur la figure 1, la direction latérale x est orthogonale à ce plan de symétrie P2. Les directions principale z et longitudinale y définies précédemment sont, elles, parallèles à ce plan de symétrie P2.

Dans l'exemple illustré, les moyens permettant de lier les parois latérales 11, 12 comprennent deux bandes de liaison respectivement avant 21 et arrière 22 s'étendant dans la direction latérale x, sensiblement planes et orthogonales auxdites parois latérales 11, 12. Chaque bande de liaison 21, 22 relie une extrémité longitudinale (avant ou arrière) de la première paroi latérale 11 à l'extrémité longitudinale correspondante (avant ou arrière) de la deuxième paroi latérale 12.

Dans l'exemple, les moyens de liaison entre la première et la deuxième paroi latérale 11, 12 comprennent en outre une partie d'ancrage ajourée 24 s'étendant au-delà des parois latérales 11, 12 et des bandes de liaison 21, 22. La partie d'ancrage 24 s'étend orthogonalement à la direction principale z. On comprend qu'une fois la garniture de siège de véhicule 101 surmoulée sur le dispositif de retenue 100, les parois latérales 11, 12 de l'élément de retenue 10 longent les parois latérales de la gorge de réception 102. La partie d'ancrage 24 est, elle, noyée dans le matériau de moulage, assurant une fixation non démontable de l'élément de retenue 10 à la garniture 101.

A noter que l'ancrage de l'élément de retenue 10 dans la matière de l'objet moulé 101 peut, selon des variantes de réalisation, être réalisé par d'autres moyens de liaison, par exemple une colle, une soudure, ou encore par le fait que la mousse, lors du procédé de moussage de l'objet 101, peut adhérer à la matière (par exemple de l'acrylonitrile butadiène styrène ou ABS) constitutive des parois latérales 11, 12 et/ou de la partie d'ancrage 24.

Comme illustré sur la figure 1, la base 20 comprend une ouverture 23 délimitée par les parois latérales 11, 12 d'une part et les bandes de liaison 21, 22 d'autre part. Il ressortira de la suite de la description que cette ouverture 23, qui résulte du procédé de fabrication de l'élément de retenue 10, peut être comblée ou recouverte par l'élément de fond 70.

Pour assurer la fixation du recouvrement 104 au dispositif de retenue 100, l'élément de retenue 10 est équipé d'une pluralité de crochets 30 faisant ici saillie depuis la face interne de chaque paroi latérale 11, 12. Chaque crochet 30 est adapté à coopérer avec une contrepartie, ici le gousset 103, à crochets ou boucles, inséré dans la gorge de retenue 14 comme illustré sur la figure 9 ou 10.

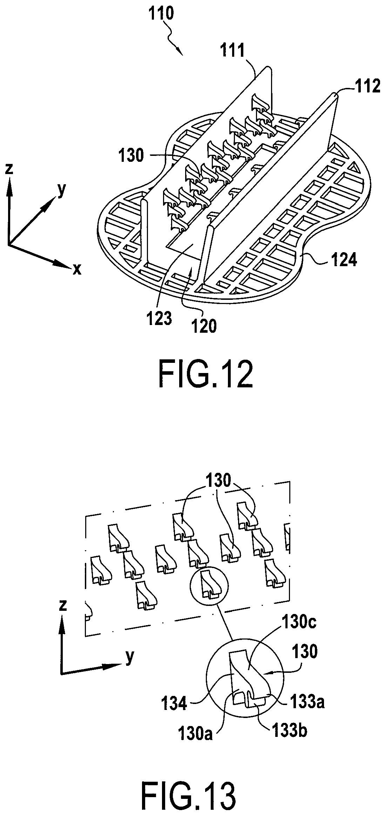

Dans l'exemple, tous les crochets 30 présentent une forme générale semblable. On pourrait cependant envisager que les crochets d'un même dispositif de retenue présentent des formes différentes, par exemple celles représentées sur les figures 12 à 16.

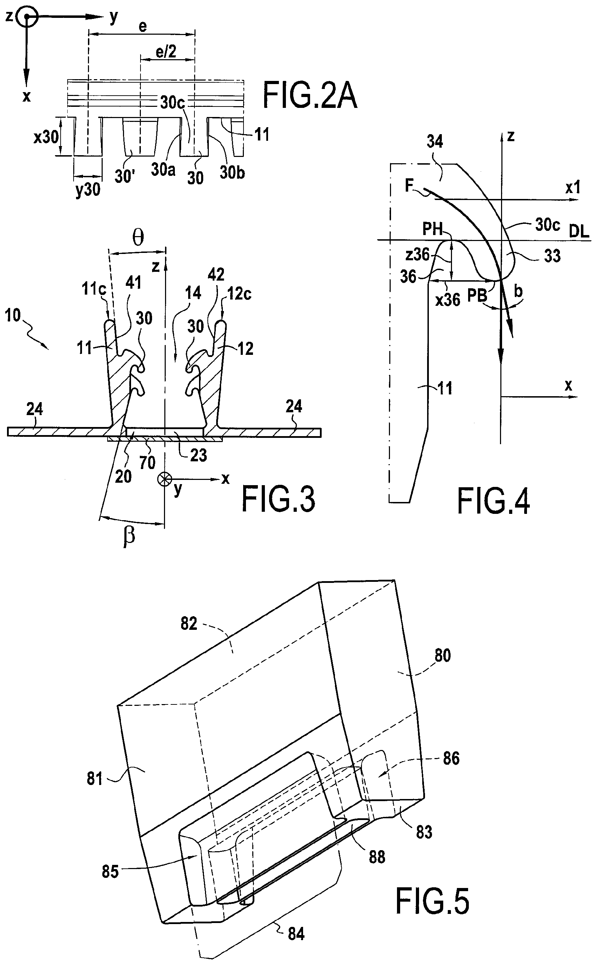

Comme illustré sur la figure 2, un crochet 30 est délimité par une première et une deuxième joue 30a, 30b, sensiblement orthogonales à la direction longitudinale y du dispositif 100. Les deux joues 30a, 30b sont reliées par une surface intermédiaire 30c formant le chant du crochet 30. Dans l'exemple, la surface intermédiaire 30c est une portion de surface cylindrique dont la génératrice s'étend dans la direction longitudinale y. Le crochet 30 présente ici une symétrie par rapport à un plan médian P3 orthogonal à la direction longitudinale y.

Comme illustré sur la figure 4, chaque crochet 30 comporte une tige 34 faisant saillie depuis la paroi latérale 11, 12 de l'élément de retenue 10, et s'étendant dans une direction principale ou direction de la hauteur sensiblement orthogonale à la paroi latérale 11, 12 de l'élément de retenue 10 (et donc sensiblement parallèle à la direction latérale de l'élément de retenue), et une partie d'accrochage 33, ici une tête d'accrochage, s'étendant latéralement par rapport à ladite direction principale de la tige 34, depuis ladite tige 34.

On définit généralement l'axe x1 d'un crochet 30 comme un axe parallèle à la direction latérale x de l'élément de retenue 10, et passant par le milieu de la base du crochet 30.

Sur la figure 4, on a représenté un crochet 30 dans un plan de projection transversal, c'est-à-dire orthogonal à la direction longitudinale y de l'élément de retenue.

Dans un tel plan, on peut définir une droite de délimitation DL de la tête d'accrochage 33, qui est une droite parallèle à la direction latérale x, et qui, en partant de l'axe x1 du crochet 30 et en se décalant vers la base 20, coupe pour la première fois la courbe enveloppe du crochet 30 en deux points. La partie du crochet qui se trouve du côté de cette droite DL le plus proche de la base 20 de l'élément de retenue et qui est la plus éloignée de la paroi latérale 11 est la tête d'accrochage 33.

Comme illustré sur les figures 3 et 4 notamment, chaque tête d'accrochage 33 est ici orientée vers la base 20 de l'élément de retenue 10. On comprend que l'extrémité distale de chaque crochet 30 regarde en direction de l'ouverture 23 de la base 20 ou vers l'élément de fond 70, s'il en est un. En d'autres termes, la tête d'accrochage 33 de chaque crochet 30 s'étend depuis sa tige 34 vers le fond de la gorge de retenue 14.

Chaque crochet 30 délimite ainsi une cavité de rétention (ou cavité de réception) 36, ouverte vers la base 20 de l'élément de retenue 10 et adaptée à recevoir un crochet ou une boucle de la contrepartie 103.

Une fois engagé(e) dans la cavité de rétention 36, le crochet ou la boucle de la contrepartie 103 est retenu(e) dans la direction principale z, mais également dans la direction latérale x de l'élément de retenue 10.

Dans le plan de projection de la figure 4, la largeur de la cavité de rétention 36, notée x36, est mesurée dans la direction latérale x du dispositif de retenue 10, entre le point bas PB du crochet qui correspond ici au point de la tête d'accrochage 33 le plus proche de la base 20 dans la direction principale z, et la partie opposée de l'élément de retenue 10 la plus proche, ici la paroi latérale 11.

La profondeur de la cavité de rétention 36 est notée z36. Elle est mesurée dans la direction principale z du dispositif de retenue 10, entre le point bas PB précité du crochet 30 et le point haut PH de la face inférieure du crochet 30 orientée vers la base 20 (autrement dit le point de cette face le plus éloigné de la base 20 dans la direction principale z, et disposé entre la paroi latérale et le point bas PB).

Sur la figure 4, on a également représenté, dans le plan de projection précité, la fibre neutre F d'un crochet 30 et l'angle saillant b formé entre un premier vecteur tangent à la fibre neutre d'un crochet au point où ladite fibre neutre F coupe la surface du crochet 30 et orienté en éloignement dudit crochet et un deuxième vecteur parallèle à la direction principale du dispositif de retenue et orienté de l'entrée vers le fond de la gorge de retenue. Cet angle b est inférieur strictement à 90°, préférentiellement compris entre 5° et 65°, ici environ égal à 30°.

Les dimensions en largeur et en longueur de chaque crochet 30, tout comme les dimensions de sa cavité de rétention 36, conditionnent la bonne retenue de la contrepartie 103.

La largeur maximale d'un crochet, notée y30 sur la figure 2A, est mesurée dans la direction longitudinale y du dispositif de retenue 10, au niveau de la partie utile d'accrochage 33, dans un plan de projection du crochet 30 orthogonal à la direction principale z du dispositif de retenue.

La longueur maximale d'un crochet, notée x30, est mesurée dans la direction latérale x du dispositif de retenue 10, depuis la paroi latérale 11 dont est issu le crochet 30.

De préférence, le ratio x30/y30 est supérieur ou égal à 1/3, encore plus préférentiellement supérieur ou égal à 1.

Dans l'exemple illustré (voir la figure 2 notamment), les crochets 30 sont agencés, sur chaque paroi latérale 11, 12, suivant des rangées 31, 32, ici deux, s'étendant dans la direction longitudinale y.

L'espace e entre deux crochets 30 d'une même rangée (i.e. l'espace entre les plans médians P3 respectifs de deux crochets adjacents) est constant, et identique sur les deux rangées 31, 32.

Les deux rangées 31, 32 de crochets 30 sont, elles, décalées dans la direction longitudinale y d'une distance e/2, de sorte que chaque crochet 30 d'une rangée 31 est décalé par rapport à chaque crochet 30 de l'autre rangée 32 dans la direction longitudinale y. Deux crochets de deux rangées adjacentes ne se chevauchent donc pas dans la direction principale z.

L'agencement particulier décrit ici n'est cependant pas limitatif, comme il ressortira des autres exemples illustrés dans la présente demande.

Lors du moulage de la garniture du siège de véhicule, il est impératif que les crochets 30 ne soient pas détériorés ou souillés par le matériau de moulage.

Dans l'exemple, l'élément de fond 70 participe à ce résultat, en évitant que le matériau de moulage ne pénètre par l'ouverture 23 de l'élément de retenue 10. Il est ici distinct de l'élément de retenue 10 et rapporté sur celui-ci pour obturer l'ouverture 23 de la base 20.

L'élément de fond 70 peut être fixé à l'élément de retenue 10 par collage, soudage, assemblage mécanique, clipsage ou tout autre mode de fixation adéquat. Il peut être réalisé dans un matériau identique ou différent de celui constituant l'élément de retenue 10.

Selon un deuxième exemple de réalisation illustré sur la figure 17, l'élément de fond 70 peut aussi être réalisé en une seule pièce avec l'élément de retenue 10', lors du moulage dudit élément 10'. Dans ce cas, l'élément de fond 70 est une partie rabattable, généralement solidaire de la base 20, et adaptée à être rabattue depuis une position initiale dans laquelle elle n'obture pas l'ouverture 23 de la base 20 vers une position dans laquelle elle recouvre l'ouverture 23.

Pour protéger les crochets au moment du moulage de la garniture de siège de véhicule et ainsi préserver leurs propriétés agrippantes, le dispositif de retenue peut en outre comporter un piédestal 80 du type représenté sur la figure 5.

Le piédestal 80 est adapté à coopérer avec l'élément de retenue 10 et éventuellement avec l'élément de fond 70, lors du moulage de la garniture 101. Comme illustré sur la figure 5, le piédestal 80 présente une forme de muret dont le sommet 83 est orienté, en position montée du dispositif de retenue 100, vers la base 20 de l'élément de retenue 10.

Pour permettre la coopération du piédestal 80 avec l'élément de retenue 10, et comme illustré sur la figure 1, l'élément de retenue 10 comporte, au voisinage de sa périphérie, une zone d'appui 40 dépourvue de crochets 30.

Dans l'exemple illustré, la zone d'appui 40 de l'élément de retenue 10 comprend une première zone d'appui centrale 41 longeant le bord longitudinal supérieur 11c de la première paroi latérale 11 et une deuxième zone d'appui centrale 42 longeant le bord longitudinal supérieur 12c de la deuxième paroi latérale 12 (figure 3).

Dans l'exemple particulier illustré, la zone d'appui 40 comprend également une zone d'appui avant 40a s'étendant à son extrémité avant 10a, sensiblement depuis le bord supérieur 11c de la première paroi latérale 11 jusqu'au bord supérieur 12c de la deuxième paroi latérale 12 de l'élément de retenue 10, en passant par la bande de liaison 21.

De la même manière, la zone d'appui 40 comprend une zone d'appui arrière 40b s'étendant à son extrémité arrière 10b, sensiblement depuis le bord supérieur 11c de la première paroi latérale 11 jusqu'au bord supérieur 12c de la deuxième paroi latérale 12 de l'élément de retenue 10, en passant par la bande de liaison 22.

Dans l'exemple particulier représenté, les zones d'appui avant et arrière 40a, 40b et les zones d'appui centrales 41, 42 forment un contour fermé entourant tous les crochets 30 de l'élément de retenue 10.

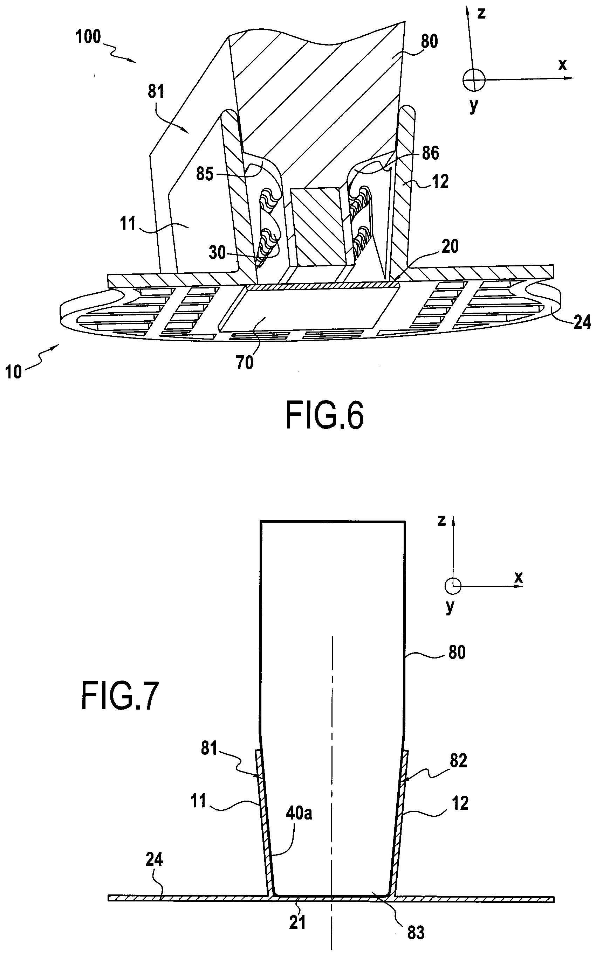

Comme illustré sur la figure 7, le piédestal 80 présente une forme complémentaire d'une partie des parois latérales 11, 12 et des bandes de liaison 21, 22 de l'élément de retenue.

Plus précisément, et comme indiqué précédemment, le piédestal 80 est adapté à coopérer par complémentarité de forme avec la zone d'appui 40 de l'élément de retenue 10.

En position montée, les faces latérales 81, 82 du piédestal 80 sont en contact avec les parois latérales 11, 12, en particulier avec les première et deuxième zones d'appui centrales 41, 42, ainsi qu'avec une portion des zones d'appui avant et arrière 40a, 40b, aux extrémités de l'élément de retenue 10.

Le sommet 83 du piédestal vient, lui, en appui, contre les bandes de liaison 21, 22.

Selon un autre exemple de réalisation, la distance entre les zones d'appui centrales 41, 42 de l'élément de retenue 10, est légèrement inférieure à la distance séparant les faces latérales 81, 82 du piédestal 80, lesdites distances étant mesurées au repos (i.e. pas en position montée) et dans la direction latérale x. Les parois latérales 11, 12 sont alors adaptées à fléchir élastiquement en s'écartant l'une de l'autre, de manière à pouvoir recevoir entre elles le piédestal 80 et assurer un contact continu entre le piédestal 80 et chacune des parois latérales 11, 12, au moins sur toute la longueur de l'élément de retenue 10 occupé par les crochets 30, et de préférence sur sensiblement toute la longueur de l'élément de retenue 10.

Comme illustré sur les figures 5 et 6, le piédestal 80 comporte une zone centrale ou zone d'insertion 84 au niveau de laquelle chaque côté latéral 81, 82 présente un renfoncement 85, 86 destiné à abriter les crochets 30 de l'élément de retenue 10 en position montée. Grâce à ces dispositions, les crochets 30 ne sont pas pris en étau entre la paroi latérale de l'élément de retenue 10 et la face latérale du piédestal 80, et ne sont pas détériorés.

De manière avantageuse, l'un parmi le piédestal 80 et l'élément de fond 70 comprend une partie aimantée et l'autre parmi le piédestal 80 et l'élément de fond 70 comprend une partie magnétique aimantée ou non aimantée. De cette façon, en s'attirant l'un l'autre, le piédestal 80 et l'élément de fond 70 sont maintenus dans une position garantissant l'étanchéité de la gorge de retenue 14 vis-à-vis de l'extérieur, au moment du moulage de l'objet 101.

Dans l'exemple illustré, l'élément de fond 70 est constitué d'acier inoxydable et le piédestal 80 comporte, au voisinage de son sommet 83, une partie aimantée 88.

Lorsque plusieurs éléments de retenue sont surmoulés par un même objet dans le but de garnir une même gorge de réception dudit objet, on peut prévoir un piédestal 80 continu de grande longueur comportant une pluralité de zones d'insertions 84 telles que définies ci-dessus, adaptées à coopérer, chacune, avec un élément de retenue 10.

Comme indiqué précédemment, l'élément de retenue 10 est réalisé, selon l'invention, par un procédé de moulage par injection, notamment de matière thermoplastique.

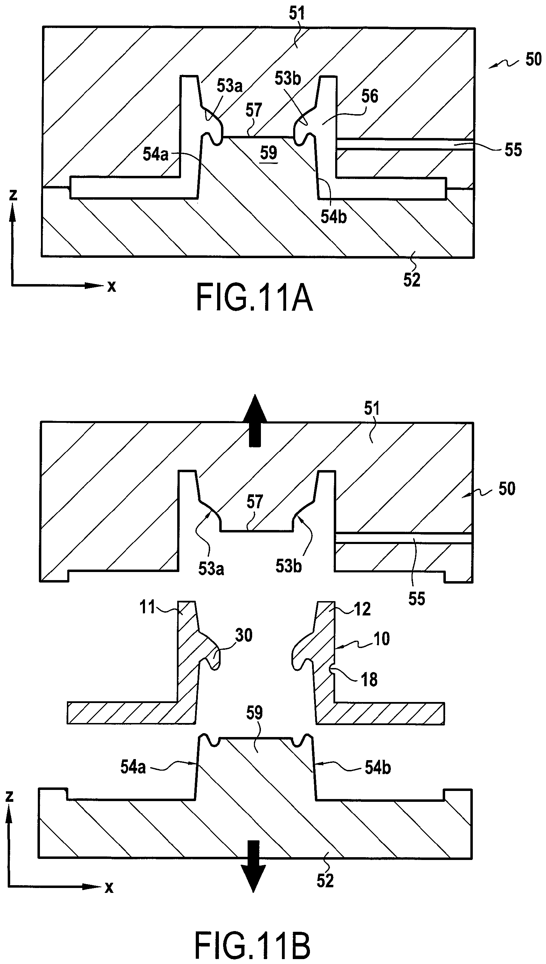

Un dispositif de moulage 50 pouvant être utilisé pour sa fabrication et le procédé de fabrication correspondant vont à présent être décrit en référence aux figures 11A et 11B.

Le dispositif de moulage 50 illustré sur la figure 11A comprend une première partie de moule ou coquille supérieure 51 et une deuxième partie de moule ou coquille inférieure 52, dont l'une au moins est mobile, et adaptées à être assemblées pour constituer un moule.

Les coquilles supérieure et inférieure 51, 52 sont conformées de sorte que leurs parois internes délimitent, une fois assemblées, une cavité de moulage 56, ici de la forme de l'élément de retenue 10. En position assemblée des parties de moule 51, 52, et comme illustré sur la figure 11A, leur plan de joint 57 intersecte chaque crochet 30 de l'élément de retenue de sorte que les parties de crochets 30 formées par une même partie de moule 51, 52 ne comportent pas de contre-dépouille contrariant un démoulage dans la direction principale z.

La coquille supérieure 51 inclut ainsi des surfaces 53a, 53b complémentaires des portions supérieures de la première et de la deuxième paroi latérale 11, 12 situées au-dessus des crochets 30, et d'une partie supérieure de chaque crochet 30.

De façon similaire, la coquille inférieure 52 forme, à l'intérieur de la cavité de moulage 56, une saillie 59 incluant des surfaces 54a, 54b complémentaires des portions inférieures de la première et de la deuxième paroi latérale 11, 12 situées en-dessous des crochets 30, et d'une partie inférieure de chaque crochet 30.

Pour le moulage de l'élément de retenue 10, les coquilles supérieure 51 et inférieure 52 sont assemblées pour former le moule 50.

Un matériau de moulage, généralement thermoplastique, est injecté par au moins un trou d'injection 55 prévu dans l'une ou l'autre des coquilles 51, 52 constituant le moule, jusqu'à remplir l'espace interne 56 du moule 50.

Les coquilles 51, 52 sont maintenues en position assemblée jusqu'au durcissement du matériau de moulage. Puis elles sont écartées l'une de l'autre, dans une direction correspondant à la direction principale z de l'élément de retenue 10, libérant l'élément de retenue 10.

On comprend ainsi que l'ouverture 23 formée dans la base 20 de l'élément de retenue 10 est délimitée par la saillie 59 de la coquille inférieure 52.

Comme représenté sur la figure 11B, l'élément de retenue 10 comporte, à sa surface extérieure, une zone en forme de creux 18 correspondant au point d'injection du matériau de moulage. Cette zone pourrait aussi se présenter sous la forme d'une boursoufflure.

Un tel procédé de moulage de chaque crochet 30 en au moins deux parties permet de former des crochets 30 orientés vers la base 20 de l'élément de retenue 10, en limitant considérablement les contraintes au moment du démoulage. Il permet, en outre, d'élargir considérablement les possibilités de formes des crochets 30.

L'élément de retenue 10 issu du procédé de moulage ainsi décrit comporte des dépouilles, décrites ci-après, résultant de la forme des coquilles 51, 52.

Comme illustré sur la figure 3, les faces internes des parois latérales 11, 12 de l'élément de retenue 10 présentent des surfaces inclinées par rapport à la direction principale z respectivement d'un angle θ au-dessus des crochets 30 et d'un angle β en-dessous des crochets 30, θ et β étant de l'ordre de 5°, l'orientation de la dépouille en partie supérieure étant inversée par rapport à celle en partie inférieure.

Chaque crochet 30, 30' comporte lui aussi une dépouille, d'orientation différente en partie supérieure et en partie inférieure.

Comme illustré sur les figures 2 et 2A, l'orientation de la dépouille des crochets peut s'inverser à différents endroits du crochet.

Dans l'exemple, chaque crochet 30 de la rangée supérieure 31 est ainsi scindé en deux parties inférieure et supérieure présentant des dépouilles d'orientation inverse. Sur une portion supérieure formée par la coquille supérieure 51, et dans un plan orthogonal à la direction latérale x, le crochet présente une dépouille telle que la distance entre les joues 30a, 30b, mesurée dans la direction longitudinale y, diminue progressivement vers le côté supérieur de l'élément de retenue 10.

Sur une portion inférieure formée par la coquille inférieure 52 et comprenant la tête du crochet (i.e. son extrémité distale), la dépouille du crochet 30 est inversée : l'écartement des joues 30a, 30b diminue progressivement vers le côté inférieur de l'élément de retenue 10.

Comme il ressort de la figure 2A, le crochet 30 présente aussi une dépouille dans un plan orthogonal à la direction principale z.

Un crochet 30' de la rangée inférieure 32 présente lui, dans un plan orthogonal à la direction latérale x, une dépouille telle que la distance entre ses joues 30a', 30b', mesurée dans la direction longitudinale y, diminue progressivement vers le côté inférieur de l'élément de retenue 10, sur toute la hauteur du crochet 30'. Dans un plan orthogonal à la direction principale z, le crochet 30' présente une dépouille telle que la distance entre les joues 30a, 30b, mesurée dans la direction latérale x, diminue progressivement lorsqu'on s'éloigne de la paroi latérale 11 de l'élément de retenue 10 dont est issu le crochet 30'.

Des exemples de formes alternatives de crochets pouvant être utilisés dans un dispositif de retenue 10 selon le présent exposé sont illustrés sur les figures 12 à 16.

Les éléments identiques ou similaires à ceux décrits précédemment sont désignés, dans la description qui suit et sur les figures correspondantes, par les mêmes références numériques incrémentées respectivement de 100, 200 ou 300.

Sur la figure 12, on a par exemple illustré un élément de retenue 110 équipé de crochets 130 comportant chacun deux têtes d'accrochage 133a, 133b superposées dans la direction de la hauteur du crochet 130, et orientées toutes deux vers la base 120 de l'élément de retenue 110. A noter que dans ce cas particulier, la fibre neutre f du crochet 130, qui permet de définir l'orientation générale du crochet 130, est considérée par tête d'accrochage.

Dans l'exemple illustré, la tête d'accrochage 133a la plus éloignée de la paroi latérale 111 dont fait saillie le crochet 130 est plus courte que la seconde 133b de manière à accrocher les boucles de la contrepartie sur plusieurs niveaux selon l'axe principal z.

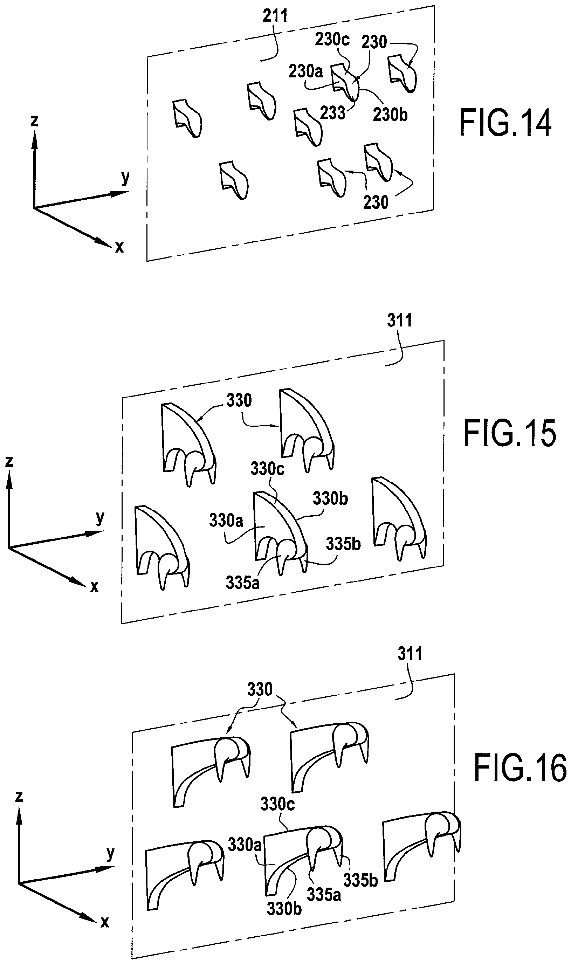

Sur la figure 14, on a illustré des crochets 230 présentant une tête d'accrochage 233 rétrécie progressivement en direction de son extrémité libre, sensiblement en forme de pointe.

Selon l'exemple illustré, la distance séparant la première et la deuxième joue 230a, 230b du crochet 230 est progressivement réduite, jusqu'à devenir nulle ou quasiment nulle à l'extrémité distale du crochet 230.

La figure 15 illustre encore un autre exemple de crochet 330, équipé d'ailes d'accrochage 335a, 335b en saillie depuis chaque joue 330a, 330b, à la manière de « cornes ». Ces ailes 335a, 335b présentent des extrémités distales pointues, orientées ici vers la base de l'élément de retenue.

Selon une variante, un crochet pourrait ne comporter qu'une seule aile faisant saillie depuis l'une seulement de ses joues.

Selon un autre exemple de réalisation illustré sur la figure 16, la partie d'accrochage du crochet peut être formée exclusivement par une ou plusieurs ailes d'accrochage 335a, 335b du type décrit en liaison avec la figure 15, faisant saillie depuis la partie centrale du crochet et orientée(s) vers la base de l'élément de retenue. La partie centrale du crochet peut alors, comme dans l'exemple, être orientée dans la direction latérale ou vers l'ouverture de la gorge de retenue.

## Revendications

1. Dispositif de retenue (100) à crochets adapté pour délimiter au moins une partie d'une gorge de réception (102) formée à la périphérie d'un objet (101), notamment un objet moulé, le dispositif de retenue (100) comprenant un élément de retenue (10) réalisé par moulage par injection, l'élément de retenue comportant une première paroi latérale (11) et une deuxième paroi latérale (12) espacées l'une de l'autre dans une direction latérale (x), et une base (20) reliant entre elles lesdites parois latérales (11, 12), lesdites parois latérales (11, 12) et la base (20) délimitant une gorge de retenue (14) ouverte dans une direction principale (z) pour recevoir une contrepartie (103) à crochets ou boucles, l'une au moins des parois latérales (11, 12) présentant une pluralité de crochets (30) adaptés pour coopérer avec la contrepartie (103), chaque crochet (30) comportant au moins une partie utile d'accrochage orientée vers la base (20) de l'élément de retenue (10), **caractérisé en ce que**, au moins un crochet (30), de préférence chaque crochet (30), présente une dépouille dans un plan orthogonal à la direction latérale (x).

2. Dispositif de retenue (100) selon la revendication 1, dans lequel la base (20) présente au moins une ouverture (23) entre la première et la deuxième paroi latérale (11, 12).

3. Dispositif de retenue (100) selon la revendication 2, comprenant en outre au moins un élément de fond (70) adapté à être positionné entre la première et la deuxième paroi latérale (11, 12) pour obturer l'ouverture (23), et dans lequel l'élément de fond (70) est un élément distinct de l'élément de retenue (10), fixé sur ledit élément de retenue (10) pour obturer l'ouverture (23).

4. Dispositif de retenue (100) selon la revendication 2, comprenant en outre au moins un élément de fond (70) adapté à être positionné entre la première et la deuxième paroi latérale (11, 12) pour obturer l'ouverture (23), et dans lequel l'élément de fond (70) est réalisé en une seule pièce avec l'élément de retenue (10), et constitue une partie rabattable depuis une position dégagée dans laquelle l'ouverture (23) de la base (20) est dégagée vers une position d'obturation dans laquelle elle obture l'ouverture (23).

5. Dispositif de retenue (100) selon l'une quelconque des revendications 3 ou 4, dans lequel l'élément de fond (70) comprend une matière magnétique, et dans lequel l'élément de retenue (10) comprend une matière magnétique.

6. Dispositif de retenue (100) selon l'une quelconque des revendications 1 à 5, dans lequel la pluralité de crochets (30) définit au moins deux séries de crochets (31, 32) espacées dans la direction principale (z), chaque crochet (30) d'une série de crochets (31) étant décalé par rapport à chaque crochet (30) de l'autre série (32) de crochets dans une direction longitudinale (y) orthogonale à la direction principale (z).

7. Dispositif de retenue (100) selon la revendication 6, dans lequel les au moins deux séries de crochets forment une première et une deuxième rangées s'étendant dans la direction longitudinale (y).

8. Dispositif de retenue (100) selon l'une quelconque des revendications 1 à 7, dans lequel chaque crochet (130) comporte au moins deux têtes d'accrochage (133a, 133b) orientées vers la base (20) de l'élément de retenue (10).

9. Dispositif de retenue (100) selon l'une quelconque des revendications 1 à 8, dans lequel au moins un crochet (30), de préférence chaque crochet, présente une dépouille dans un plan orthogonal à la direction principale (z).

10. Dispositif de retenue (100) selon l'une quelconque des revendications 1 à 9, dans lequel les faces internes des parois latérales (11, 12) de l'élément de retenue (10) présentent des surfaces inclinées par rapport à la direction principale (z).

11. Dispositif de retenue (100) selon l'une quelconque des revendications 1 à 10, dans lequel au moins un crochet (330), de préférence chaque crochet, est équipé d'au moins une aile d'accrochage (335) faisant saillie depuis l'une de ses joues.

12. Dispositif de retenue (100) selon l'une quelconque des revendications 1 à 11, comprenant en outre un piédestal (80) adapté à coopérer avec l'élément de retenue (10) de façon à encadrer les crochets (30) de chaque paroi latérale (11, 12) lors du moulage.

13. Dispositif de retenue (100) selon la revendication 12, dans lequel le piédestal (80) comprend une partie magnétique adaptée à coopérer par attraction magnétique avec l'élément de retenue (10) et/ou l'élément de fond (70).

14. Ensemble comprenant un dispositif de retenue (100) selon l'une quelconque des revendications 1 à 13, et une contrepartie (103) à crochets ou boucles agencée dans la gorge de retenue (14) de sorte que des crochets ou boucles de ladite contrepartie (103) coopèrent avec des crochets (30) de l'élément de retenue (10) pour réaliser une fixation auto-agrippante.

15. Ensemble comprenant un objet (101), notamment un objet moulé, présentant une gorge de réception (102), et un dispositif de retenue (100) selon l'une quelconque des revendications 1 à 13 délimitant au moins une partie de ladite gorge de réception (102).

16. Ensemble selon la revendication 15, dans lequel l'objet (101) est moulé et le dispositif de retenue (100) est surmoulé par l'objet moulé (101).

17. Procédé de réalisation par moulage d'un dispositif de retenue à crochets (100) selon l'une quelconque des revendications 1 à 13, dans lequel :
- on fournit un moule (50) comprenant au moins deux parties de moule (51, 52) adaptées à être assemblées pour former une cavité de moulage (56) dans laquelle les crochets (30) de l'élément de retenue (10) sont formés,
- on injecte un matériau de moulage dans le moule (50), notamment en une seule étape d'injection, de telle sorte que le plan de joint (57) des deux parties de moule (51, 52) intersecte chaque crochet (30) et que les parties de crochets (30) formées par une même partie de moule (51, 52) ne comportent pas de contre-dépouille contrariant un démoulage dans la direction principale (z) du dispositif de retenue (100),
- on sépare les deux parties de moule (51, 52) dans la direction principale (z).

18. Procédé selon la revendication 17, dans lequel la cavité de moulage présente une saillie interne délimitant une ouverture (23) dans la base (20) de l'élément de retenue (10), et dans lequel les contre-dépouilles d'un crochet (30) par rapport à une partie de moule (51, 52) sont uniquement situées dans la partie de la cavité de moulage (56) délimitée par l'autre partie de moule (51, 52).

## Patentansprüche

1. Haltevorrichtung (100) mit Haken, die dazu ausgebildet ist, wenigstens einen Teil einer Aufnahmenut (102), welche am Umfang eines Objekts (101), insbesondere eines geformten Objekts ausgebildet ist, zu begrenzen, wobei die Haltevorrichtung (100) ein Halteelement (10), welches durch Spritzgießen hergestellt ist, wobei das Halteelement eine erste Seitenwand (11) und eine zweite Seitenwand (12) aufweist, die in einer seitlichen Richtung (x) voneinander beabstandet sind, sowie eine Basis (20) umfasst, welche die Seitenwände (11, 12) untereinander verbindet, wobei die Seitenwände (11, 12) und die Basis (20) eine Haltenut (14) begrenzen, die in einer Hauptrichtung (z) offen ist, um ein Gegenstück (103) mit Haken oder Schlaufen aufzunehmen, wobei wenigstens eine der Seitenwände (11, 12) eine Vielzahl von Haken (30) aufweist, die dazu ausgebildet sind, mit dem Gegenstück (103) zusammenzuwirken, wobei jeder Haken (30) wenigstens einen nützlichen Einhakteil, welcher in Richtung der Basis (20) des Halteelements (10) ausgerichtet ist, aufweist, **dadurch gekennzeichnet, dass** wenigstens ein Haken (30), vorzugsweise jeder Haken (30), eine Formschräge in einer zu der seitlichen Richtung (x) orthogonalen Ebene aufweist.

2. Haltevorrichtung (100) nach Anspruch 1, bei der die Basis (20) wenigstens eine Öffnung (23) zwischen der ersten und der zweiten Seitenwand (11, 12) aufweist.

3. Haltevorrichtung (100) nach Anspruch 2, die ferner wenigstens ein Bodenelement (70) umfasst, das dazu ausgebildet ist, zwischen der ersten und der zweiten Seitenwand (11, 12) positioniert zu werden, um die Öffnung (23) zu verschließen, und bei der das Bodenelement (70) ein von dem Halteelement (10) getrenntes Element ist, das an dem Halteelement (10) befestigt ist, um die Öffnung (23) zu verschließen.

4. Haltevorrichtung (100) nach Anspruch 2, die ferner wenigstens ein Bodenelement (70) umfasst, das dazu ausgebildet ist, zwischen der ersten und der zweiten Seitenwand (11, 12) positioniert zu werden, um die Öffnung (23) zu verschließen, und bei der das Bodenelement (70) mit dem Halteelement (10) einstückig ausgebildet ist und einen Teil bildet, der aus einer freiliegenden Position, in der die Öffnung (23) der Basis (20) freiliegt, in eine Verschlussposition, in der er die Öffnung (23) verschließt, umklappbar ist.

5. Haltevorrichtung (100) nach einem der Ansprüche 3 oder 4, bei der das Bodenelement (70) ein magnetisches Material umfasst und bei der das Halteelement (10) ein magnetisches Material umfasst.

6. Haltevorrichtung (100) nach einem der Ansprüche 1 bis 5, bei der die Vielzahl von Haken (30) wenigstens zwei Reihen von Haken (31, 32) definiert, die in der Hauptrichtung (z) beabstandet sind, wobei jeder Haken (30) einer Reihe von Haken (31) gegenüber jedem Haken (30) der anderen Reihe (32) von Haken in einer zu der Hauptrichtung (z) orthogonalen Längsrichtung (y) versetzt ist.

7. Haltevorrichtung (100) nach Anspruch 6, bei der die wenigstens zwei Haken-Reihen eine erste und eine zweite Reihe, die sich in der Längsrichtung (y) erstrecken, bilden.

8. Haltevorrichtung (100) nach einem der Ansprüche 1 bis 7, bei der jeder Haken (130) wenigstens zwei Einhakköpfe (133a, 133b), welche in Richtung der Basis (20) des Halteelements (10) ausgerichtet sind, umfasst.

9. Haltevorrichtung (100) nach einem der Ansprüche 1 bis 8, bei der wenigstens ein Haken (30), vorzugsweise jeder Haken, eine Formschräge in einer zu der Hauptrichtung (z) orthogonalen Ebene aufweist.

10. Haltevorrichtung (100) nach einem der Ansprüche 1 bis 9, bei der die Innenseiten der Seitenwände (11, 12) des Halteelements (10) gegenüber der Hauptrichtung (z) geneigte Flächen aufweisen.

11. Haltevorrichtung (100) nach einem der Ansprüche 1 bis 10, bei der wenigstens ein Haken (330), vorzugsweise jeder Haken, mit wenigstens einem Einhakflügel (335), welcher von einer seiner Wangen vorspringt, ausgestattet ist.

12. Haltevorrichtung (100) nach einem der Ansprüche 1 bis 11, die ferner einen Sockel (80) umfasst, der dazu ausgebildet ist, mit dem Halteelement (10) derart zusammenzuwirken, dass die Haken (30) von einer jeden Seitenwand (11, 12) während des Formens eingerahmt sind.

13. Haltevorrichtung (100) nach Anspruch 12, bei der der Sockel (80) einen magnetischen Teil umfasst, der dazu ausgebildet ist, mit dem Halteelement (10) und/oder dem Bodenelement (70) durch magnetische Anziehung zusammenzuwirken.

14. Anordnung, umfassend eine Haltevorrichtung (100) nach einem der Ansprüche 1 bis 13 und ein Gegenstück (103) mit Haken oder Schlaufen, welches in der Haltenut (14) angeordnet ist, so dass Haken oder Schlaufen des Gegenstücks (103) mit Haken (30) des Halteelements (10) zusammenwirken, um eine selbstsperrende Befestigung herzustellen.

15. Anordnung umfassend ein Objekt (101), insbesondere ein geformtes Objekt, das eine Aufnahmenut (102) aufweist, sowie eine Haltevorrichtung (100) nach einem der Ansprüche 1 bis 13, die wenigstens einen Teil der Aufnahmenut (102) begrenzt.

16. Anordnung nach Anspruch 15, bei der das Objekt (101) geformt ist und die Haltevorrichtung (100) über das geformte Objekt (101) angeformt ist.

17. Verfahren zur Herstellung einer Haltevorrichtung mit Haken (100) nach einem der Ansprüche 1 bis 13 durch Formen, wobei:
- eine Form (50) mit wenigstens zwei Formteilen (51, 52) bereitgestellt wird, welche dazu ausgebildet sind, zusammengefügt zu werden, um einen Formhohlraum (56) zu bilden, in dem die Haken (30) des Halteelements (10) geformt werden,
- ein Formmaterial in die Form (50) eingespritzt wird, insbesondere in einem einzigen Einspritzschritt, derart, dass die Formteilfläche (57) der beiden Formteile (51, 52) jeden Haken (30) schneidet und dass die Teile von Haken (30), welche durch einen gleichen Formteil (51, 52) gebildet werden, keine Hinterschneidung aufweisen, die ein Ausformen in der Hauptrichtung (z) der Haltevorrichtung (100) behindert,
- die beiden Formteile (51, 52) in der Hauptrichtung (z) getrennt werden.

18. Verfahren nach Anspruch 17, bei dem der Formhohlraum einen inneren Vorsprung aufweist, der eine Öffnung (23) in der Basis (20) des Halteelements (10) begrenzt, und bei dem die Hinterschneidungen eines Hakens (30) in Bezug auf einen Formteil (51, 52) nur in dem Teil des Formhohlraums (56) gelegen sind, der durch den anderen Formteil (51, 52) begrenzt ist.

## Claims

1. A hooked retaining device (100) for defining at least a portion of a reception groove (102) formed at the periphery of an article (101), in particular a molded article, the retaining device (100) comprising a retaining element (10) made by injection molding, the retaining element having a first side wall (11) and a second side wall (12) that are spaced apart from each other in a lateral direction (x), and a base (20) connecting together said side walls (11, 12), said side walls (11, 12) and the base (20) defining a retaining groove (14) that is open in a main direction (z) in order to receive a counterpart (103) having hooks or loops, at least one of the side walls (11, 12) presenting a plurality of hooks (30) adapted to co-operate with the counterpart (103), each hook (30) having at least one hooking portion oriented towards the base (20) of the retaining element (10), **characterized in that** at least one hook (30), and preferably each hook (30), presents a taper in a plane orthogonal to the lateral direction (x).

2. A retaining device (100) according to claim 1, wherein the base (20) presents at least one opening (23) between the first and second side walls (11, 12).

3. A retaining device (100) according to claim 2, further including at least one bottom element (70) suitable for being positioned between the first and second side walls (11, 12) in order to close the opening (23), and wherein the bottom element (70) is an element that is distinct from the retaining element (10) and fastened on said retaining element (10) in order to close the opening (23) .

4. A retaining device (100) according to claim 2, further including at least one bottom element (70) suitable for being positioned between the first and second side walls (11, 12) in order to close the opening (23), and wherein the bottom element (70) is made integrally with the retaining element (10) and constitutes a portion that can be folded between a disengaged position in which the opening (23) in the base (20) is disengaged and a closed position in which it closes the opening (23).

5. A retaining device (100) according to any one of claims 1 to 5, wherein the bottom element (70) comprises a magnetic material, and wherein the retaining element (10) comprises a magnetic material.

6. A retaining device (100) according to any one of claims 1 to 5, wherein the plurality of hooks (30) defines at least two series of hooks (31, 32) that are spaced apart in the main direction (z), each hook (30) of one series of hooks (31) being offset relative to each hook (30) of the other series (32) of hooks in a longitudinal direction (y) orthogonal to the main direction (z).

7. A retaining device (100) according to claim 6, wherein at least two series of hooks form first and second rows extending in the longitudinal direction (y).

8. A retaining device (100) according to any one of claims 1 to 10, wherein each hook (130) has at least two hooking heads (133a, 133b) oriented towards the base (20) of the retaining element (10).

9. A retaining device (100) according to any one of claims 1 to 8, wherein at least one hook (30), and preferably each hook, presents a taper in a plane orthogonal to the main direction (z).

10. A retaining device (100) according to any one of claims 1 to 9, wherein the inside faces of the side walls (11, 12) of the retaining element (10) present surfaces that are inclined relative to the main direction (z).

11. A retaining device (100) according to any one of claims 1 to 10, wherein at least one hook (330), and preferably each hook, is provided with at least one hooking spike (335) projecting from one of its cheeks.

12. A retaining device (100) according to any one of claims 1 to 11, further including a pedestal (80) adapted to co-operate with the retaining element (10) so as to cover the hooks (30) of each side wall (11, 12) during molding.

13. A retaining device (100) according to claim 12, wherein the pedestal (80) has a magnetic portion adapted to co-operate by magnetic attraction with the retaining element (10) and/or the bottom element (70).

14. An assembly comprising a retaining device (100) according to any one of claims 1 to 13, and a counterpart (103) having hooks or loops arranged in the retaining groove (14) in such a manner that the hooks or loops of said counterpart (103) co-operate with the hooks (30) of the retaining element (10) in order to provide a self-gripping fastening.

15. An assembly comprising an article (101), in particular a molded article, having a reception groove (102), and a retaining device (100) according to any one of claims 1 to 13 defining at least a portion of said reception groove (102).

16. An assembly according to clam 15, wherein the article (101) is molded and the retaining device (100) is overmolded by the molded article (101).

17. A method of making a hooked retaining device (100) according to any one of claims 1 to 13 by molding, the method comprising the following steps:
• providing a mold (50) having at least two mold portions (51, 52) adapted to be assembled together to form a mold cavity (56) in which the hooks (30) of the retaining element (10) are formed;
• injecting a molding material into the mold (50), in particular in a single injection step, so that the parting surface (57) of the two molds portions (51, 52) intersect each hook (30) and so that the hook portions (30) formed by any one mold portion (51, 52) do not have any undercut opposing unmolding in the main direction (z) of the retaining device (100); and
• separating the two mold portions (51, 52) in the main direction (z).

18. A method according to claim 17, wherein the mold cavity presents an internal projection defining an opening (23) in the base (20) of the retaining element (10), and wherein the undercuts of a hook (30) relative to a mold portion (51, 52) are situated solely in the portion of the mold cavity (56) that is defined by the other mold portion (51, 52).
